# EUROPEAN PATENT SPECIFICATION

(11) **EP 4 729 768 B1**
(45) Date of publication and mention of the grant of the patent: **02.12.2026**
(21) Application number: 24306706.3
(22) Date of filing: 16.10.2024
(51) Int. Cl.: F03D 9/34, F03D 13/10, F03D 13/20

(54) **CAROUSEL LIFTING TOWER**
KARUSSELL-HEBETURM
TOUR ÉLÉVATRICE À CARROUSEL

(43) Date of publication of application: 22.04.2026
(60) Divisional application: 26212955.4
(73) Proprietor: Technip Energies France, 92741 Nanterre Cedex (FR)
(72) Inventor: Gonzalez-Maya, Miguel, 92741 Nanterre Cedex (FR)
(74) Representative: Edson, Russell Gregory

(56) References cited:
- EP-B1- 3 336 037
- DE-U1- 29 908 395
- NO-B1- 346 981
- US-A1- 2016 237 985

## Description

### Technical Field

The present disclosure relates generally to a carousel lifting tower and methods of assembling a wind turbine generator using the carousel lifting tower.

### Background

A wind turbine generator (WTG) may be mounted to a floating wind- turbine platform and may be deployed into a body of water. Upon construction, wind- caused rotation of a rotor blade of the wind turbine generator may be used to produce electrical energy. The floating wind turbine platform may include one or more columns, one or more pontoons, or a combination thereof, which may float in the body of water to keep the wind turbine generator above a water level of the body of water in a stable manner. A structure, such as the wind turbine generator (WTG), may be mounted to the floating wind-turbine platform while the floating wind-turbine platform is deployed in the body of water adjacent to a quay. Mounting the structure while the floating wind turbine platform is in the body of water may be difficult due to the size and weight of the structure, a lack of infrastructure at the quay, and spatial constraints by other equipment and structures located at the quay.

US 2016/237985 A1 discloses a device to handle, mount or dismantle components of a wind turbine, especially rotor blades and/or a nacelle, with the aid of a crane.

### Summary

As used below, any reference to a series of examples is to be understood as a reference to each of those examples disjunctively (e.g., "Examples 1-4" is to be understood as "Examples 1, 2, 3, or 4").

Example 1 is a carousel lifting tower comprising: a tower positionable in an upwardly angled orientation and defining a tower axis; a lift frame movably mounted on the tower for translation along the tower axis; a carousel coupled to the lift frame for rotation about the tower axis; and a load handler on the carousel configured for releasably engaging a component to be lifted.

Example 2 is the carousel lifting tower of example(s) 1, further comprising: a controller communicatively coupled to one or more of the lift frame, the carousel, and the load handler, the controller including control logic for controlling one or more of the translation along the tower of the lift frame, the rotation about the tower axis of the carousel, and the releasably engaging of the component to be lifted by the load handler.

Example 3 is the carousel lifting tower of example(s) 1-2, wherein the lift frame is rotationally constrained with respect to the tower axis and the carousel is rotatably coupled to the lift frame for providing at least some of the rotation about the tower axis.

Example 4 is the carousel lifting tower of example(s) 1-3, wherein the lift frame is constrained to pure translation along the tower such that the rotation about the tower axis is provided by a rotation of the carousel with respect to the lift frame.

Example 5 is the carousel lifting tower of example(s) 1-4, further comprising: a plurality of rails arranged along the tower in parallel with the tower axis; and a plurality of bogies between the lift frame and the rails.

Example 6 is the carousel lifting tower of example(s) 1-5, further comprising: a lifting device; and a plurality of lifting cables extending between the lifting device and the lift frame.

Example 7 is the carousel lifting tower of example(s) 1-6, wherein the carousel is coupled to the lift frame for rotation about the tower axis through a range of motion of at least 180 degrees.

Example 8 is the carousel lifting tower of example(s) 1-7, wherein the carousel is coupled to the lift frame for rotation about the tower axis through a 360 degree range of motion.

Example 9 is the carousel lifting tower of example(s) 1-8, wherein the tower comprises a truss structure extending along a length from a lower end of the tower to an upper end of the tower, wherein the lift frame is movably mounted on the tower for translation along at least 70% of the length of the truss structure.

Example 10 is the carousel lifting tower of example(s) 1-9, further comprising: one or more counterweights arranged on the carousel to balance the load handler and the component to be lifted.

Example 11 is the carousel lifting tower of example(s) 1-10, wherein the load handler comprises one or both of a clamp and a spreader beam, each operable for releasably engaging the component.

Example 12 is the carousel lifting tower of example(s) 1-11, wherein the component to be lifted comprises a component of a wind turbine generator (WTG) having a mass of at least 600 metric tons.

Example 13 is the carousel lifting tower of example(s) 1-12, wherein the tower comprises a truss structure and the lift frame comprises a circular structure disposed about the tower.

Example 14 is a method of assembling a wind turbine generator (WTG), comprising: at a tower erected at a surface of a quay at which to assemble the WTG, positioning a carousel at a selected axial and rotational position along the tower and engaging, via a load handler on the carousel, a WTG component to be lifted; translating and rotating the carousel along the tower to position the engaged WTG component at a selected assembly position of the WTG component; and securing the WTG component to the WTG at the selected assembly position and releasing the WTG component from the load handler.

Example 15 is the method of example(s) 14, wherein translating and rotating the carousel along the tower comprises translating a lift frame coupled to the carousel along a tower axis of the tower, the tower extending upwardly along the tower axis.

Example 16 is the method of example(s) 14-15, wherein translating and rotating the carousel along the tower comprises rotating the carousel about the tower axis of the tower.

Example 17 is the method of example(s) 14-16, further comprising, subsequent to releasing the WTG component from the load handler: engaging, using the load handler, a second WTG component to be lifted; translating and rotating the carousel along the tower to position the second WTG component at a second selected assembly position of the second WTG component; and securing the second WTG component to the WTG at the second selected assembly position and releasing the second WTG component from the load handler.

Example 18 is the method of example(s) 14-17, further comprising: positioning a floating platform adjacent to the quay, wherein the selected assembly position of the WTG component is on or above the floating platform.

Example 19 is the method of example(s) 14-18, further comprising: prior to securing the WTG component to the WTG at the selected assembly position, moving the erected tower along the surface of the quay adjacent to the floating platform.

Example 20 is a carousel lifting tower comprising: a plurality of truss structure segments assemble-able into an upwardly extending tower, the plurality of truss structure segments extending along a length of the tower when assembled from a lower end truss structure segment to an upper end truss structure segment along a tower axis; a lift frame movably mountable about the tower for translation along the tower axis, wherein the lift frame is movably mountable about the tower for translation along at least 70% of the length of the tower; a carousel disposed about the lift frame, the carousel being coupled to the lift frame for rotation 360 degrees about the tower axis; and a load handler comprising a clamp and a spreader beam, the load handler being arranged on the carousel configured for releasably engaging, by the clamp or the spreader beam, a component to be lifted.

### Brief Description of the Drawings

FIG. 1A shows a perspective view of an example of a carousel lifting tower according to some embodiments of the present disclosure.
FIG. 1B shows a partial perspective view of the carousel lifting tower of FIG. 1A being used to secure a first wind turbine generator (WTG) component to a floating platform.
FIG. 1C shows a partial perspective view of the carousel lifting tower of FIG. 1A being used to lift a second WTG component of a WTG.
FIG. 1D shows a perspective view of the carousel lifting tower of FIG. 1A being used to secure the second WTG component to the WTG.
FIG. 1E shows a partial perspective view of the carousel lifting tower of FIG. 1A being used to lift a third WTG component of the WTG.
FIG. 1F shows a perspective view of the carousel lifting tower of FIG. 1A being used to secure the third WTG component to the WTG.
FIG. 2 shows an example of a floating platform to which a WTG may be secured according to some embodiments of the present disclosure.
FIG. 3 is a partial perspective view of a portion of the carousel lifting tower of FIG. 1.
FIG. 4 shows a perspective view of an example of a truss structure segment of a carousel lifting tower according to some embodiments of the present disclosure.
FIG. 5 shows a perspective view of an example of a lift frame of a carousel lifting tower according to some embodiments of the present disclosure.
FIG. 6 shows a perspective view of an example of a bogie and rail of a carousel lifting tower according to some embodiments of the present disclosure.
FIG. 7 shows a perspective view of an example of a carousel and load handler of a carousel lifting tower according to some embodiments of the present disclosure.
FIG. 8 is a schematic example of a carousel lifting tower including the lifting devices and lifting cables of the carousel lifting tower according to some embodiments of the present disclosure,
FIG. 9 is a schematic example of a carousel lifting tower including the lifting devices and lifting cables of the carousel lifting tower according to some embodiments of the present disclosure.
FIG. 10 is a flowchart of an example of a method for assembling a wind turbine generator according to some examples of the present disclosure.
FIG. 11 is a flowchart of an example of a method for assembling a wind turbine generator according to some examples of the present disclosure.

### Detailed Description

The present invention discloses a carousel lifting tower for assembling a wind turbine generator according to claim 1 and a method of assembling a wind turbine generator according to claim 10.

The carousel lifting tower may be positioned on a quay. The quay may be a platform lying within, alongside, or projecting into a body of water (e.g., an ocean, sea, lake, or other body of water, whether natural or manmade). The carousel lifting tower may be used to assemble the WTG on a floating platform. To enable assembly of the WTG on the floating platform, the floating platform may be positioned adjacent to the quay and in the body of water. The floating platform may be a semisubmersible platform, a tension leg platform, a barge platform, a spar platform, or the like.

The carousel lifting tower may include a tower. In some implementations the tower may be erected at a surface of a quay at which to assemble a WTG. The tower may be erected by assembling several truss structure segments into an upwardly extending tower on the quay by stacking truss structure segments of the tower on top of one another (e.g. by using another crane and/or by using a tower climbing assembly technique). The segmented and stackable nature of the truss structure segments enables a height of the tower to be adjusted based on the WTG to be assembled using the tower or based on other considerations. For example, for a WTG with a 15 megawatt (MW) capacity, a number of truss structure segments to assemble a 150 meter tower may be used. Once assembled, the tower may be positioned in an upwardly angled orientation and may define a tower axis. The upwardly angled orientation of the tower may include any orientation (e.g., vertical or inclined) in which the tower is angled upward with respect to a surface of the quay. In some implementations the upwardly angled orientation of the tower may be a vertical orientation (e.g. a perfectly vertical orientation or a vertical orientation deviating from perfectly vertical by less than three degrees, less than two degrees, or less than one degree).

A lift frame may be movably mounted on the tower for translation along the tower axis. The lift frame may be a framework that is mountable on the tower such that the lift frame extends around the tower and is able to be translated upwardly and downwardly along the tower axis. The lift frame may extend around an entirety of the tower (i.e., may extend 360 degrees around the tower), or the lift frame may extend partially around the tower (e.g., may extend 180 degree or more around the tower or 270 degrees or more around the tower). In some implementations the lift frame may be movably mounted on the tower using one or more rails (e.g. tracks) arranged on the tower along the tower axis and bogies (e.g., structures with wheels, rollers, or the like) on the lift frame and positioned to engage the rails in a rolling fashion. The carousel lifting tower may further include a lifting device (e.g. an electrical hoist) and lifting cables extending between the lifting device and the lift frame. The actuation of the lifting device may cause the translation of the lift frame along the tower.

A carousel may be coupled to the lift frame for rotation about the tower axis. The carousel may be a framework or other structure mounted about (entirely or partially) the lift frame in a manner allowing rotation of the carousel on the lift frame. To enable rotation, in some implementations, there may be rails on an outer side of the lift frame and there may be bogies on the carousel positioned between the rails of the lift frame and the carousel. There may also be motors associated with at least some of the bogies to cause movement of the bogies along the rails and therefore rotation of the carousel about the tower axis.

The carousel lifting tower may further include a load handler on the carousel configured for releasably engaging a component to be lifted. The load handler may include any number of handling devices such that is configured for releasably engaging a component to be lifted (e.g., WTG components of the WTG such as WTG tower sections, nacelles, gearboxes, blades, and rotors). In one example, the load hander includes one or both of a clamp and a spreader beam, each operable for releasably engaging a component. In some examples, the load handler may include combinations of one or more of pallet forks, crane grapples, or other suitable devices for releasably engaging components in addition or alternative to the clamp and spreader beam.

Typical nearshore WTGs may have a 6 megawatt (MW) capacity, a 9 MW capacity, or a capacity therebetween. However, recent advancements in WTG technology have enabled development of larger WTGs with increasing capacity, such as capacity of up to 20 MW. With such increasing size and capacity of WTGs, WTG assembly is becoming more difficult and costly. Thus, there is a need for improved systems and methods for WTG assembly.

The above-described carousel lifting tower may provide a flexible and an efficient solution for assembling WTGs of varying size and capacity. To do so, the carousel lifting tower can lift WTG components of varying size and position the components at different heights and/or locations with respect to the floating platform. For example, the rotation of the carousel about the tower axis in combination with the translation of the lift frame along the tower axis enables the positioning of components at the various heights and/or locations with respect to the floating platform. Moreover, the multi-device configuration of the load handler (e.g. including both of a clamp and a spreader beam) may enable lifting and placement of a variety of different components of which WTG is comprised (e.g., blades, rotors, nacelles, WTG tower sections, etc.). It may be possible to exchange the handling devices for different applications of WTG assembly. It may also be possible to change a height of the tower, and therefore a range of motion of the translation of the lift frame, (e.g., by changing a number of truss structure segments used to assemble the tower) for different applications of the WTG assembly. Thus, the carousel lifting tower may further provide a flexible solution for assembling WTGs of varying sizes and capacities or with varying components.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

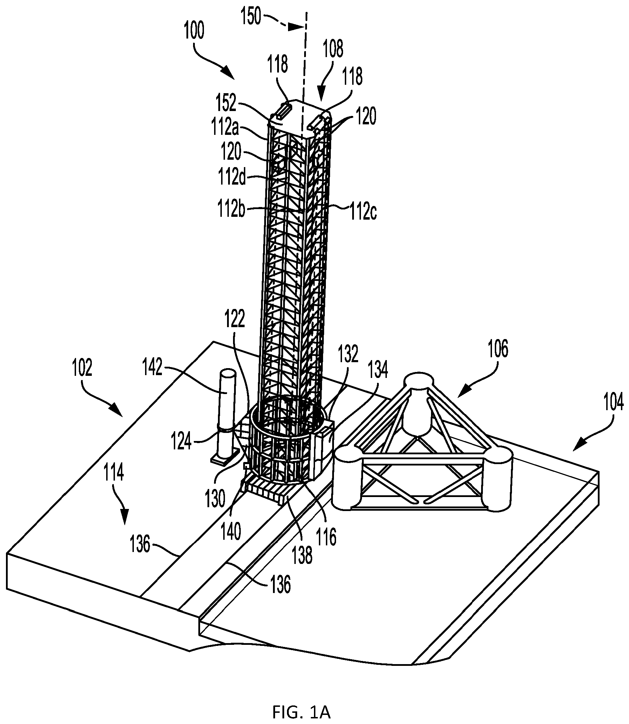

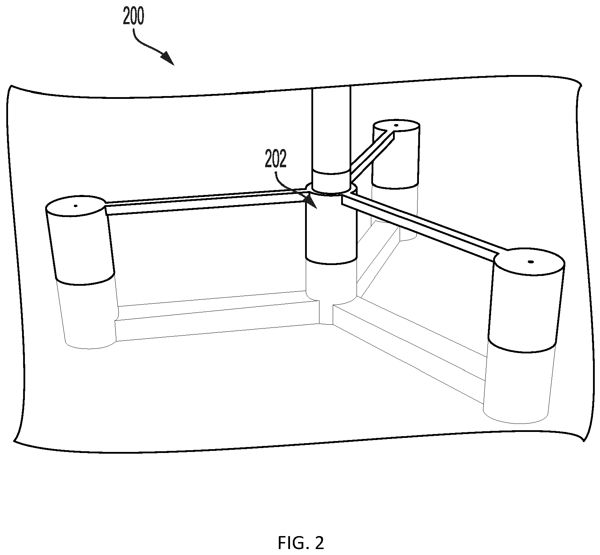

FIG. 1A shows an example of a carousel lifting tower 100 according to some embodiments of the present disclosure. In the example of FIG. 1A, the carousel lifting tower 100 is positioned on a quay 102. The quay 102 may be a platform lying within, alongside, or projecting into a body of water 104 (e.g., an ocean, sea, lake, or other body of water, whether natural or manmade). A floating platform 106 is positioned adjacent to the quay 102 in the body of water 104. Although one example of a floating platform 106 is shown in FIG. 1A, other floating platform types or configurations are possible in other implementations. Another example of another floating platform 200 shown in FIG. 2. Types of floating platforms on which a WTG may be assembled can include semisubmersible platforms, tension leg platforms, barge platforms, or the like. The floating platform 106 may be stabilized in the position adjacent to the quay 102 using mooring lines extending between the floating platform 106 and the quay 102, stabbing guides and/or mooring lines extending between the floating platform 106 and one or more mooring piles in a floor of the body of water 104, other stabilization devices or systems, or a combination thereof. Although one position of the floating platform 106 relative to the quay 102 is shown, in other examples, the floating platform 106 may be positioned at any location in the body of water 104 that is adjacent the quay 102.

The carousel lifting tower 100 of FIG. 1A includes a tower 108. The tower 108 is positionable in an upwardly angled orientation and defines a tower axis 150, which may be a center axis of the tower 108. The upwardly angled orientation of the tower 108 may include any orientation (e.g., vertical or inclined) in which the tower 108 is angled upward with respect to a top surface 114 of the quay 102. In the example of FIG. 1A, the tower 108 is positioned verically and, as such, the tower axis 150 is a substantially vertical axis oriented about ninety degrees (e.g. within one degree, two degrees, or three degrees of ninety degrees) with respect to the top surface 114 of the quay 102. In other examples in which the tower 108 is positioned in an incline, the tower axis may be oriented at an angle other than ninety degrees with respect to the top surface 114 of the quay 102 (e.g., 95 degrees, 100 degrees, 105 degrees, 110 degrees, any number therebetween, or any number greater than 110 or less than 95). In one particular example, the tower 108 may lean toward the floating platform 106 and may therefore have an angle other than ninety degrees with respect to the top surface 114 of the quay 102.

In FIG. 1A, the tower 108 is positioned on a tower bogie 138, which may be a platform or cart with wheels that enables repositioning of the tower 108. The tower bogie 138 is moveable (e.g. horizontally translatable) along tracks 136 on the top surface 114 of the quay 102. The movement of the tower bogie 138 can be used to reposition the tower 108, such as to position the tower 108 adjacent to the floating platform 106 or to move the tower 108 from one WTG assembly location on the quay to another location where a different WTG may be assembled on a different floating platform.

The tower 108 may have a truss structure. In some implementations the truss structure may be a framework of rigid members (e.g. beams and/or struts) assembled into a rigid arrangement, which may facilitate the upwardly angled orientation. The truss structure may extend along a length of the tower 108, such as from a lower end of the tower 108 (i.e., an end near the top surface 114 of the quay 102) to an upper end of the tower 108 (i.e., an end near top surface 152 of the tower 108). The truss structure may further facilitate a high load bearing capacity of the tower 108.

In the example shown in FIG. 1A, the tower 108 includes four columns 112a-d arranged at vertices of the substantially rectangular tower. The four columns 112a-d are rigidly interconnected by the truss structure. In other examples, a different number of columns and other arrangements of the columns are possible. Additionally, in other examples, a different number of beams may interconnect the arrangement of columns and/or the truss structure may have a different number of linear members arranged in a different number of triangles.

The tower 108, including its columns 112a-d and truss structure, may be made up of individual truss structure segments stacked on top of one another.

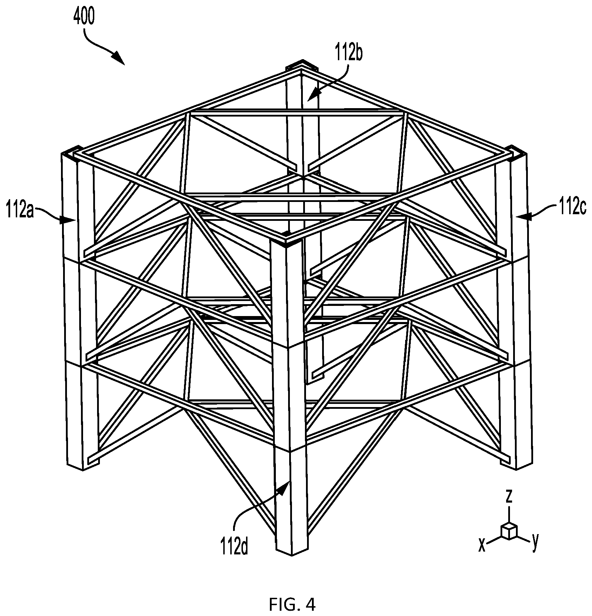

FIG. 4 shows an example of a truss structure segment 400 of the tower 108. In some implementations, truss structure segments are assembled into an upwardly extending tower (e.g., tower 108). For example, there may be a plurality of truss structure segments (e.g. 3, 4, 5, 6, 7, or greater) stacked on top of one another to assemble the tower 108 in the upwardly angled orientation shown in FIG. 1A. The truss structure segments may be assembled using another crane and/or using a push pull mechanical system to build the tower 108. The truss structure segments may extend along a length of the tower 108 when assembled from a lower end truss structure segment (i.e., a truss structure segment positioned closest to the quay 102) to an upper end truss structure segment along the tower axis 150.

Returning to FIG. 1A, the carousel lifting tower 100 of FIG. 1A further includes a lift frame 116 movably mounted on the tower 108 for translation along the tower axis 150. For example, it may be possible to translate the lift frame 116 upward (i.e., away from the quay 102) along the tower 108 and/or downward (i.e., toward the quay 102) along the tower 108. In one example, the lift frame 116 is movably mounted on the tower 108 for translation along at least 70% of the length of the truss structure of the tower 108 (e.g., for translation along 70%-100% of the length of the truss structure). In other examples, the lift frame 116 is movably mounted on the tower 108 for translation along at least 50% of the length of the truss structure of the tower 108 (e.g., for translation along 50%-100% of the length of the truss structure). The lift frame 116 may be disposed about the tower 108 (e.g., configured to extend about (completely or partially) a perimeter of the tower).

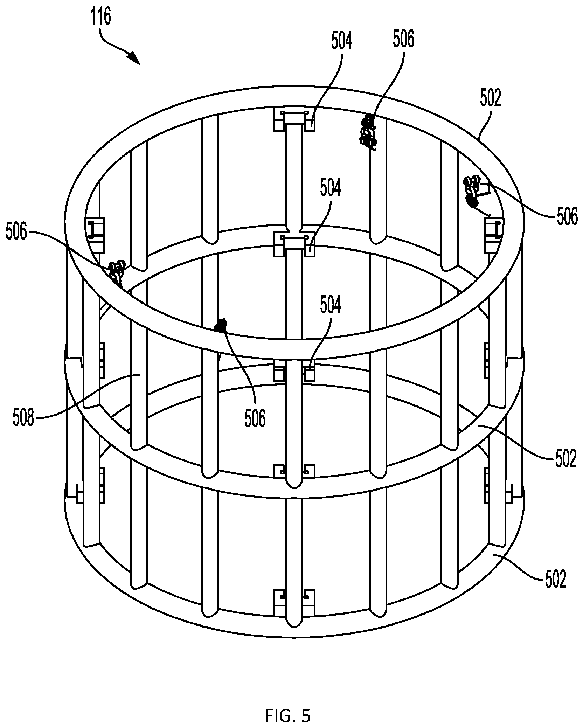

As shown in FIG. 1A, as well as in greater detail in FIG. 5, the lift frame 116 has a circular structure disposed about the tower 108, including three circular beams 502 that are interconnected by linear members (e.g., linear member 508). The lift frame 116 may have a radius of at least 20 to 40 meters, at least 15 to 60 meters, or at least 30 meters in some implementations. In other implementations, the lift frame 116 may comprise other arrangements or structures. For example, the lift frame 116 may have a triangular structure, rectangular structure, or another toric structure of another suitable shape in other implementations. Additionally or alternatively, the structure of the lift frame 116 may include a different number of circular or other shaped beams and/or a different number of linear members interconnecting the beams in other implementations.

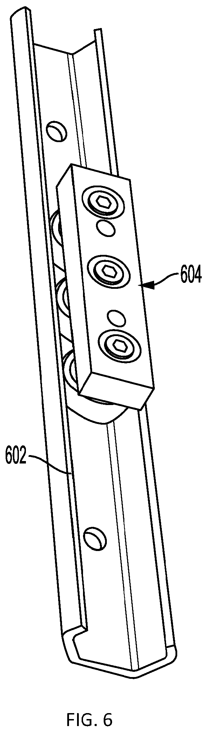

To enable the translation of the lift frame 116 along the tower axis 150, the carousel lifting tower 100 may include one or more rails (i.e., one or more beams or supports that form a track). The rails may be arranged along the tower 108 in parallel with the tower axis 150. An example of a segment of a rail 602 is shown in FIG. 6. The carousel lifting tower 100 may further include bogies (i.e., structures with one or more wheels). An example of a bogie 604 is also shown in FIG. 6. The bogie 604 may include one or more wheels, rollers, or the like positioned to move along the rail 602. Lifting frame bogies, which may appear similar to bogie 604, may be arranged between the lift frame 116 and the rails on the tower 108. When arranged between the lift frame 116 and the rails, the wheels, rollers, or the like of each lifting frame bogie is aligned with (i.e., positioned to engage in a rolling fashion with) a rail. Consequently, translation of the lift frame 116 along the tower axis 150 may be facilitated, at least in part, by movement of the lift frame bogies along the rails.

Although one example of a rail 602 and bogie 604 is shown in FIG. 6, other rolling or sliding mechanisms may be positioned between the lift frame 116 and any type of rail forming a track on the tower 108 to engage in a rolling fashion and therefore facilitate the translation of the lift frame 116 in other implementations. Additionally, in other implementations, the rails may be positioned on the lift frame 116 in parallel to the tower axis 150 and the bogies or other rolling or sliding mechanisms may be on the tower 108 and positioned to engage with the rails on the lift frame 116 in the rolling fashion.

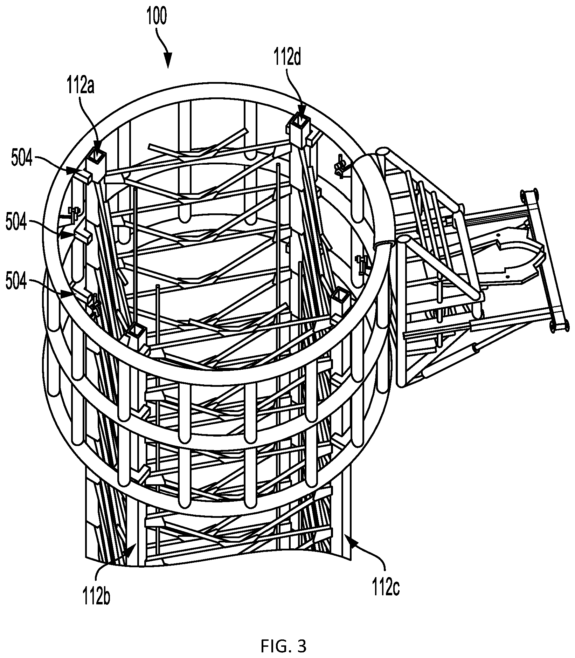

In some implementations, in the arrangement between the lift frame 116 and the rails, the lift frame bogies or other rolling or sliding mechanisms can be positioned at least partially within a set of bearing elements 504 of the lift frame 116. The bearing elements 504 may therefore facilitate the translating the lift frame 116 along the tower 108 while the lift frame 116 remains in contact with and constrained by the tower 108. In the example shown in FIG. 5, the lift frame 116 includes four sets of the bearing elements 504 spaced about the circumference of the lift frame 116. In this example each of the four sets include a vertical linear arrangement of bearing elements 504 positioned in a location corresponding to one of the columns 112a-d of the tower 108. In this way, each set of bearing elements may be aligned with one of the columns 112a-d when the lifting frame 116 is disposed on the tower 108. Alignment of the bearing elements 504 with the columns 112a-d is shown in greater detail in FIG. 3. Furthermore, in this way, the lift frame 116 may be suitably supported and constrained relative to the tower 108 such that the lift frame 116 may be translated along the tower axis 150 even while being subjected to loading forces during use.

In examples in which the bearing elements 504 are aligned with the columns 112a-d and include the lift frame bogies, the columns 112a-d of the tower 108 may include the rails. Additionally, in such examples, the lifting frame bogies may be positioned with the wheel, roller, or the like of the lifting frame bogies facing toward a center of the lift frame 116. Thus, when the lift frame 116 is movably mounted to the tower 108, the lift frame bogies may be positioned between the bearing elements 504 of the lift frame 116 and the rails of the columns 112a-d. In this way, translation of the lift frame 116 along the tower axis 150 may be facilitated, at least in part, by movement of the lift frame bogies along the rails of the columns 112a-d. The configuration of the lift frame 116 shown in FIG. 5 is just one example of a suitably configured lift frame 116 and other configurations are also possible. For example, other implementations of the lift frame may exclude the bearing elements or may include a different number of bearing elements. Additionally, other configurations of the carousel lifting tower 100 are possible. For example, the rails may be positioned along the tower axis on areas of the tower 108 other than the columns 112a-d.

In some examples, the lift frame 116 may be rotationally constrained with respect to the tower axis 150. In some implementations, this may include components or combinations of components of the tower 108 and/or the lift frame 116 that facilitate the translation of the lift frame 116 along the tower axis 150 while partially or entirely preventing the lift frame 116 from rotating about the tower axis 150. The lift frame 116 may be able to rotate less than 360 degrees about the tower axis 150 in some examples. In other examples, the lift frame 116 may be constrained to pure translation along the tower 108 (i.e., the lift frame 116 may not be able to rotate about the tower axis 150 and only translate along the tower axis 150). In the example shown the lift frame 116 is rotationally constrained with respect to the tower axis. More specifically, the interaction between the bearing elements 504 and/or the lifting frame bogies and rails on the tower 108 may prevent the lift frame 116 from any rotational movement relative to the tower 108 (i.e., about the tower axis 150). In other implementations the lift frame 116 may include components which enable at least partially rotation of the lift frame 116 relative to the tower 108.

The carousel lifting tower 100 may further include a lifting mechanism with one or more lifting devices 118 for causing the translation of the lift frame 116 along the tower axis 150. The lifting devices 118 may be an electric hoist, electric winch, or other suitable device usable to lift and lower a load. The lifting devices 118 may include one or more wire drums (i.e., spools around which lifting cables 120 may be wound). The lifting cables 120 may be wire rope or another suitable type of lifting cable with relatively high tensile strength. The lifting cables 120 may extend between the lifting devices 118 and the lift frame 116. For example, the lift frame 116 of FIG. 5 also includes pulleys 506. Thus, the lifting cables 120 may extend between the wire drums of lifting devices 118 and the pulleys 506 of the lift frame 116. In the example of FIG. 5, the pulleys 506 are coupled with linear members of the lift frame 116. In other examples, the pulleys 506 may be coupled with the circular beams 402 or other components of the lift frame. Additionally, there may be a different number of pulleys 506 coupled with the lift frame in other examples.

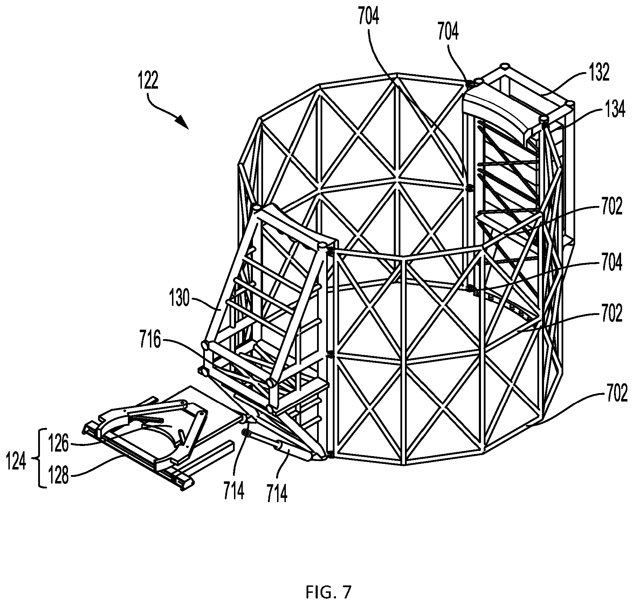

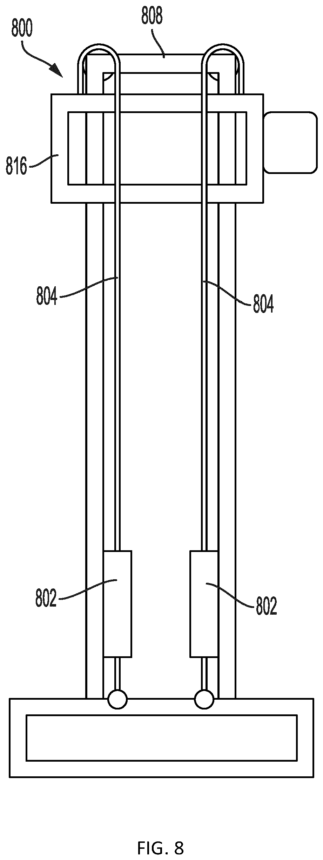

In the example shown, actuation of the lifting devices 118 causes winding or unwinding of the lifting cables 120 with respect to the wire drums, which, in turn, may cause the translation of the lift frame 116 along the tower axis 150. In one example, motors of the lifting devices 118 may rotate the wire drum to wind or unwind the lifting cables 120. Winding the lifting cables 120 using the lifting devices 118 may move the lift frame 116 in one direction along the tower 108 (e.g., upward away the top surface 114 of the quay 102) while unwinding the lifting cables 120 using the lifting devices 118 may move the lift frame 116 in the opposite direction along the tower 108 (e.g., downward toward the top surface 114 of the quay 102). Examples of lifting mechanisms are shown and described in greater detail with respect to FIGS. 7 and 8, which are discussed further below.

The carousel lifting tower 100 of FIG. 1A further includes a carousel 122 coupled to the lift frame 116 for rotation about the tower axis 150. The carousel 122 may be positioned to encompass a portion or an entirety of a circumference of the lift frame 116. As shown in FIG. 1A, as well as in greater detail in FIG. 7, the carousel 122 may have a circular structure similar to the lift frame 116 and may have a radius of at least 20 to 40 meters, at least 15 to 60 meters, or at least 30 meters. For example, as shown in FIG. 7, the carousel 122 includes three circular beams 702 that are interconnected by linear members and a truss structure. In other implementations, the carousel 122 may comprise other arrangements or structures. For example, the carousel 122 may have a triangular structure, rectangular structure, or another structure of another suitable shape in other implementations. Additionally or alternatively, the structure of the carousel 122 may include a different number of circular or other shaped beams and/or a different number of linear members and/or truss structures interconnecting the beams in other implementations.

As mentioned above, the lift frame 116 may be rotationally constrained with respect to the tower axis 150. Thus, the carousel 122 may be rotatably coupled to the lift frame 116 for providing at least some of the rotation about the tower axis 150. More specifically, in some examples and as mentioned above, the lift frame 116 is constrained to pure translation along the tower 108 such that the rotation about the tower axis 150 is provided by a rotation of the carousel 122 with respect to the lift frame 116. The carousel 122 may be coupled to the lift frame 116 for rotation about the tower axis 150 through a range of motion of at least 180 degrees, through a range of motion at least 270 degrees, or through a 360 degree range of motion.

To facilitate rotation and as shown in FIG. 7, the carousel 122 may include carousel bogies 704. The carousel bogies 704 may be located and otherwise configured to interact in a rolling fashion with the circular beams 402 of the lift frame 116. In this manner, the carousel 122 may be coupled to the lift frame 116 while still able to rotate about the tower axis 150. In other implementations, the carousel 122 may be coupled to the lift frame 116 in other manners while still able to rotate about the tower axis 150. As just one example, a lift frame may include bogies on its exterior that interact in a rotating fashion with curbed members that are on or part of the carousel to allow mounting the carousel on the lift frame while also allowing the carousel to rotate about the tower axis 150.

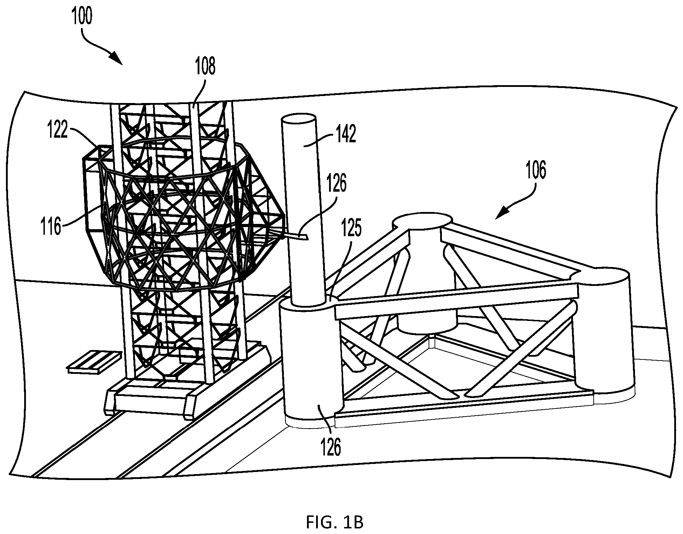

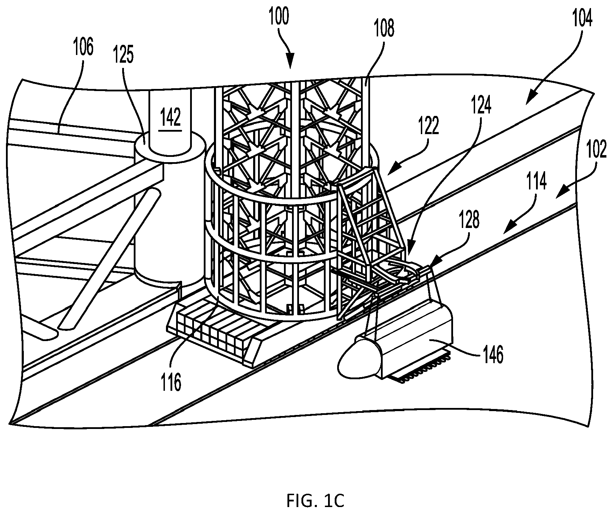

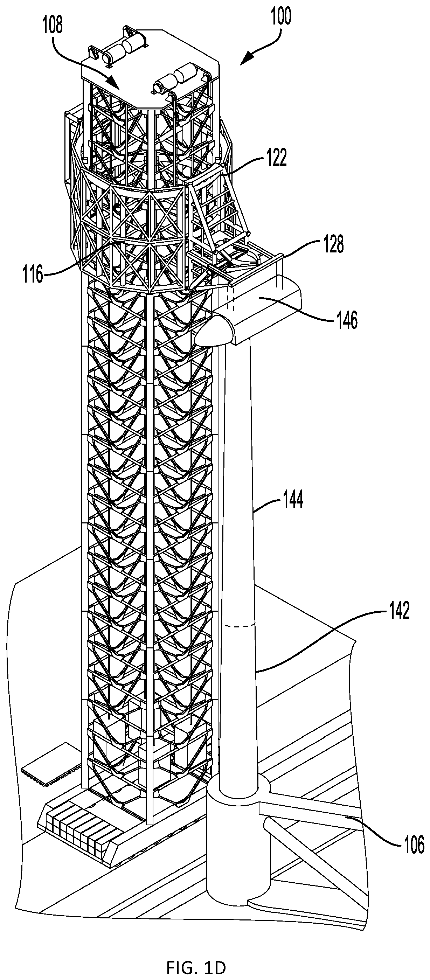

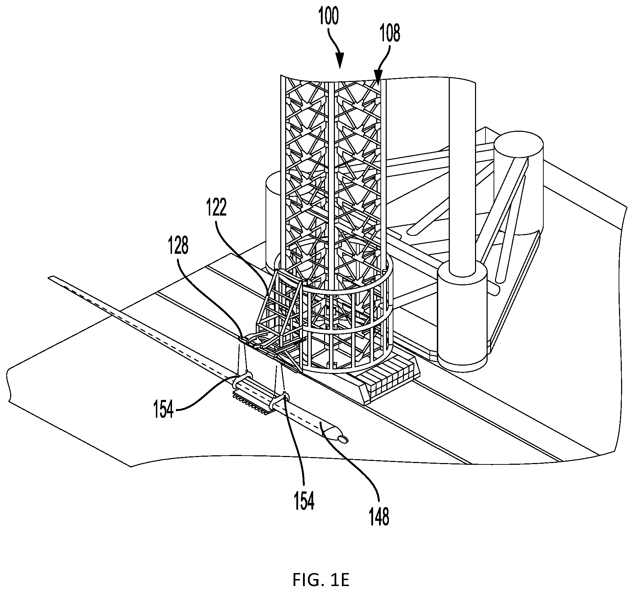

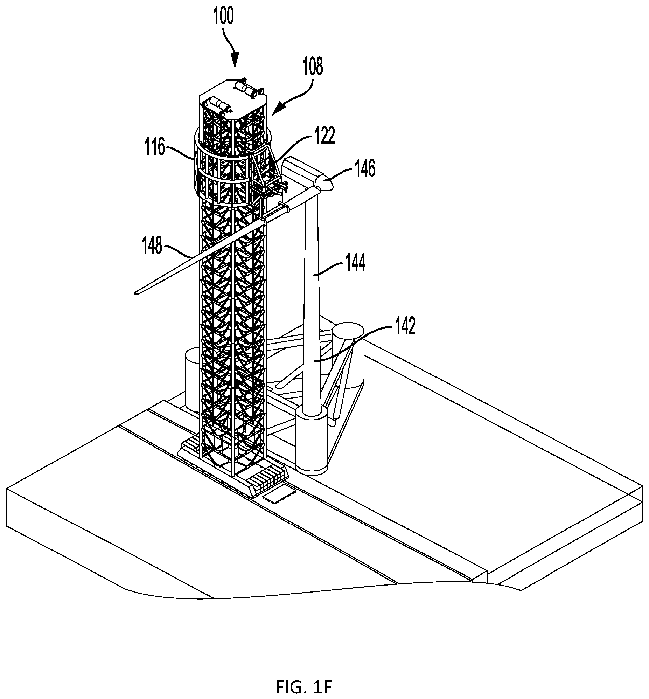

As further shown in FIG. 1A, and in greater detail in FIG. 7, a load handler 124 may be on the carousel 122 and configured for releasably engaging a component (or more than one component) to be lifted, such as a WTG component of a WTG. The load handler 124 may include any number of handling devices for releasably engaging with components of a structure, such as components of the WTG. In some examples, the handling devices of the load handler 124 may be combined or coupled such that the load handler 124 is cohesive piece of equipment on the carousel 122. In other examples, the handling devices of the load handler 124 may be separate devices that are positioned at separate locations on the carousel 122. In the example of FIGS. 1 and 6, the load handler 124 includes a clamp 126 and a spreader beam 128, which are each operable for releasably engaging the component (or more than one component). In other implementations, the load handler 124 may include pallet forks, crane grapples, or other suitable devices that are operable for releasably engaging the component (or more than one component) in addition or alterative to the clamp 126 and spreader beam 128.

The load handler 124 may be on the carousel 122 via coupling to a component of the carousel 122. In the example shown, the load handler 124 is coupled with a first protruding section 130 and extension elements 714 of the carousel 122. More specifically, in FIGS. 1 and 6, the clamp 126 is coupled with the carousel 122 at a shelf 716 of the first protruding section 130. The clamp 126 may be coupled elsewhere on the first protruding section 612 or carousel 122 in other examples. Additionally in the example of FIGS. 1 and 6, the spreader beam 128 is coupled with the carousel 122 via the extension elements 614. The spreader beam 128 may be coupled elsewhere on carousel 122 in other examples.

A length of the first protruding section 130 can be defined by a distance between a coupling point of the first protruding section 130 on the circular structure of the carousel 122 and a coupling point of a handling device (e.g., the clamp 126) on the first protruding section 130. Similarly, a length of the extension elements 614 can be defined by a distance between coupling points of the extension elements 614 on the circular structure of the carousel 122 and coupling points of one or more handling devices (e.g., spreader beam 128) on the extension elements 614. The length of the first protruding section 130 and/or the length of the extension elements 614 can depend on a selected assembly position of the WTG on the floating platform 106. On some floating platforms, the selected assembly position may be on a periphery of the floating platform, allowing for a relatively short protruding section. An example of a selected assembly position on a periphery of the floating platform is shown in FIGS. 1A-1F in which the WTG is assembled on an outer column of the floating platform 106. For other floating platforms (e.g., the floating platform 200 shown in FIG. 2) locations of assembly of a WTG may be more central. For example, an assembly position of a WTG on the floating platform 200 may be on central column 202. The length of the first protruding section may be configured accordingly to allow sufficient reach based on the selected assembly position.

Consequently, in some examples a longer protruding section and/or longer extension elements can be used for assembling the WTG on another part of a floating platform that is further from the quay 102 (e.g., a part that is more central to the floating platform) or on another type of floating platform on which the assembly position would be further from the quay 102. Additionally or alternatively, different handling devices can be used which extend further from the carousel 122 to assembly the WTG on a part of the floating platform that is further from the quay 102 or on another type of floating platform 106 on which the assembly position would be further from the quay 102.

Moreover, in some examples, the carousel 122 may include a truss boom extension in addition to or alternative to the first protruding section 130. For example, the truss boom extension may be coupled with and extend from the first protruding section 130 on the carousel 122 or may be coupled with and extend from other portions of the carousel 122. The truss boom extension may have a length between 20 and 50 meters between, 10 and 60 meters, or between 5 and 70 meters. In such examples, the load handler 124 may be positioned on an end of the truss boom extension. Additionally, in such examples, the truss boom extension may be rotatable upwardly into a retracted position and rotatable back downwardly into a protracted position. The length of the truss boom extension and/or a range of motion of retraction and protraction of the truss boom extension can depend on the size and configuration of the floating platform and/or a selected assembly location for the WTG. For example, a shorter truss boom extension may be used for assembling the WTG on the floating platform 106 of FIGS. 1A-1F than for assembling the WTG on the floating platform 200 of FIG. 2.

Additionally, the clamp 126 may be retractable and protractible. For example, the clamp 126 may be rotated upwardly into a retracted position when not in use and rotated back downwardly to the protracted position shown in FIG. 6 when it is to be used. The retraction of the clamp 126 may be useful for moving the clamp 126 out of the way when using other handling devices (e.g., the spreader beam 128). The clamp 126 may be configured to open and close around a component of a structure (e.g., a WTG component). Thus, the clamp may be operable to engage a component (e.g., protracting and/or closing around the component) and to release a component (e.g., by opening and/or retracting). Similar to the clamp 126, the spreader beam 128 may be coupled with the carousel 122 in manners that allow it to be moved between retracted and protracted positions depending on whether it is currently in use or not. The spreader beam 128 may include hooks, slings, shackles, or the like for engaging and releasing a WTG component.

As shown in the example of FIG. 7, the carousel 122 may also include a counterweight 134 arranged on the carousel 122 to balance the load handler 124 and the component (e.g., a WTG component) to be lifted. The counterweight 134 may be positioned on an opposite side of the carousel 122 (i.e., 180 degrees) from the load handler 124. In the example shown in FIG. 7, the carousel 122 includes a second protruding section 132 positioned opposite to the first protruding section 130. The counterweight 134 is positioned within the second protruding section 132 in this example. In other examples, the counterweight 134 may be positioned at other locations about the carousel 122 and/or more than one counterweight may be used. For instance, a first counterweight may be positioned on the carousel 120 degrees clockwise from the load handler 124 and a second counterweight may be positioned 120 degrees counterclockwise from the load handler 124. The counterweights may be exchanged for counterweights of different weights depending on the load associated with the components being engaged by the load handler 124.

To facilitate the releasable engaging of the load handler 124 with components, the translation movement of the lifting frame 116, the rotational movement of the carousel 122, or a combination thereof, the carousel lifting tower 100 may further include a controller 140, an example of which is shown in FIG. 1A. The controller 140 may be communicatively coupled to one or more of the lift frame 116, the carousel 122, and the load handler 124. The controller 140 may include control logic for controlling one or more of the translation along the tower 108 of the lift frame 116, the rotation about the tower axis 150 of the carousel 122, and the releasably engaging of the components by the load handler 124.

For example, to facilitate the control of the carousel 122 by the controller 140, there may be one or more motors associated with a gear wheel on the lift frame 116. The motors may be electromechanical motors for converting signals from the controller 140 into mechanical rotation of the gear wheel. In such an example, carousel 122 may include a gear track that engages with the gear wheel such that rotation of the gear wheel drives the gear track, thereby rotating the carousel 122. The controller 140 may be communicatively coupled with the carousel 122 by being communicatively coupled with the motors associated with the gear wheel. The controller 140 may transmit signals to the motors to rotate the gear wheel, and therefore cause rotation of the carousel 122 about the lift frame 116 and tower axis 150. The use of other mechanisms for driving the rotation of the carousel 122 is possible in other implementations.

Additionally, the controller 140 may be communicatively coupled with the lifting frame 116 by being communicatively coupled with the lifting devices 118 that lift or lower the lift frame 116 via the lifting cables 120. Thus, the controller 140 may transmit signals to the lifting devices 118 to cause translation of the lift frame 116. For example, the signals may cause the lifting devices 118 to wind or unwind the lifting cables 120 with respect to the wire drums to lift or lower the lift frame 116.

Furthermore, to facilitate the engaging and/or releasing of components by the load handler 124, the controller 140 may be communicatively coupled with each of the handling devices. For example, the controller 140 may be communicatively coupled with an actuator of the clamp 126 to cause the clamp 126 to at least partially close to engage a component, to at least partially open to release the component, to cause retraction or protraction of the clamp, or a combination thereof. For example, in some implementations, the controller 140 may send a control signal to a hydraulic pump to cause it to actuate such that a hydraulic piston extends or retracts to cause the clamp 126 to open or close. The clamp 126 may further be equipped with a hydraulic ball joint for allowing the clamp 126 to move to take up any potential gaps that may occur due to movement of the floating platform 106 with respect to the carousel lifting tower 100. The hydraulic ball joint may function as a mechanical link that can orientate in six degrees of freedom (three degrees of translational freedom and three degrees of rotational freedom) to maintain a desired alignment of WTG components relative to one another during coupling. The controller 140 may also be communicatively coupled with the spreader beam 128 to facilitate movement of the spreader beam 128 between the retracted and protracted positions. For example, the controller 140 may be communicatively coupled the rotary joints of the extension elements 614 to cause the movement of the spreader beam 128 between the retracted and protracted positions.

The controller 140 may include a processor and a memory. In a non- limiting example, the memory can include instructions that are executable by the processor for causing the processor to perform operations that translate the lift frame 116 along the tower, rotate the carousel 122 about the tower axis 150, engage, by the load handler 124, a component of a structure, release, by the load handler 124, the component, or a combination thereof.

Although one example position of the controller 140 is shown, the controller 140 may reside in various locations relative to the carousel lifting tower 100. In some non-limiting examples, a processor of the controller 140 may be communicatively coupled to a memory of the controller by a bus. The processor can include one processor or multiple processors. Non-limiting examples of the processor include a Field-Programmable Gate Array (FPGA), an application specific integrated circuit (ASIC), a microprocessor, or any combination of these. Instructions executable by the processor may be stored in the memory, along with other information such as ranges of acceptable floating wind turbine platform inclination or other parameters.

In a non-limiting example, the instructions are executable by the processor for causing the processor to perform various operations, such as translating the lift frame, rotating the carousel, engaging a component, and/or releasing the component. In some examples, the instructions can include, but are not limited to including, processor specific instructions generated by a compiler or an interpreter from code written in any suitable computer-programming language, such as C, C++, C#, Java, or Python. Through the instructions, the processor may, in some non-limiting examples, operate to translate the lift frame, rotate the carousel, engage a component, and/or release the component.

The memory of the controller 140 can include one memory device or multiple memory devices. In a non-limiting example, the memory can be non-volatile and may include any type of memory device that retains stored information when powered off. Non-limiting examples of the memory include electrically erasable and programmable read-only memory (EEPROM), flash memory, or any other type of non- volatile memory. At least some of the memory device can include, but is not limited to including, a non-transitory computer-readable medium from which the processor can read the instructions. In a non-limiting example, a non-transitory computer-readable medium can include electronic, optical, magnetic, or other storage devices capable of providing the processor with the instructions or other program code. Non-limiting examples of a non-transitory computer-readable medium include magnetic disk(s), memory chip(s), ROM, random-access memory (RAM), an ASIC, a configured processor, optical storage, or any other medium from which a computer processor can read the instructions.

FIGS. 1A-1F show example axial and rotational positions of the carousel 122, lift frame 116, and load handler 124 with respect to the tower 108. For example, FIG. 1A shows the lift frame 116, carousel 122, and load handler 124 in a first axial and rotational position close to the top surface 114 of the quay 102, with the carousel 122 and load handler 124 oriented away from the body of water 104 and towards a first WTG component (i.e., first WTG tower section 142) on the quay. In the first axial and rotational position a handling device, such as the clamp 126, of the load handler 124 can releasably engage a component to be lifted (e.g., the first WTG tower section 142). The first WTG tower section 142 is one example of a component of a WTG. Other components may include additional tower sections, nacelles, gearboxes, blades, and rotors. In the example shown, the clamp 126 of the load handler 124 is engaged the with the first WTG tower section 142. As described above, the controller 140 may include control logic for positioning the carousel 122 and lift frame 116 in the first axial and rotational position. The controller 140 may further be communicatively coupled with the clamp 126 for causing the clamp 126 to releasably engage the first WTG tower section 142.

FIG. 1B then shows a second axial and rotational position of the lift frame 116, carousel 122, and load handler 124 above the top surface 114 of the quay 102, with the carousel 122 and load handler 124 oriented toward the body of water 104 and towards a first selected assembly position 125 on the floating platform 106. In the second axial and rotational position, a WTG component (e.g., the first WTG tower section 142) can be secured at the first selected assembly position 125 and released from the load handler 124 (such as from a handling device, such as the clamp 126, of the load handler 124). The controller 140 may control the carousel 122, lift frame 116, and load handler 124 to cause the carousel 122, lift frame 116, and load handler 124 to move from the first axial and rotational position to the second axial and rotational position. In the move from the first axial and rotational position to the second axial and rotational position, the lift frame 117 may move upward along the tower axis 150. Additionally, the carousel 122 may rotate about the tower axis 150 to point the clamp 126 with the first WTG tower section 142 engaged toward the first selected assembly position 125. A selected assembly position (e.g., the first selected assembly position 125) can represent a location at which a component of a structure (e.g., the first WTG tower section 142 of the WTG) is to be positioned and secured during assembly of the structure (e.g., the WTG). In this case, the first selected assembly position 125 is a mounting surface on a column of the floating platform 106. In other examples, the selected assembly position can be another mounting surface of the floating platform 106 (e.g., on another column or component of the floating platform). The controller 140 may then facilitate securing of the first WTG tower section 142 at the first selected assembly position 125, which may involve mounting the first WTG tower section 142 to the first selected assembly position 125. When mounted, the first WTG tower section 142 may be positioned on a flange transition extension on the first selected assembly position 125, which may facilitate a secure positioning of the first WTG tower section in the first selected assembly position. Once the first WTG tower section 142 is mounted to the first selected assembly position 125, the controller can cause the clamp 126 to release the first WTG tower section 142. For example, the controller can cause the clamp 126 to at least partially open and to retract inward toward the tower 108.

FIG. 1C shows the lift frame 116, carousel 122, and load handler 124 in a third axial and rotational position, which is similar to the first axial and rotational position in that the lift frame 116, carousel 122, and load handler 124 are close to the top surface 114 of the quay 102, with the carousel 122 and load handler 124 oriented away from the body of water 104 and towards a second WTG component (i.e., nacelle 146) on the quay. In the third axial and rotational position a handling device, such as the spreader beam 128, of the load handler 124 can releasably engage a second WTG component to be lifted (e.g., the nacelle 146). As described above, the controller 140 may include control logic for positioning the carousel 122 and lift frame 116 in the third axial and rotational position. The controller 140 may further be communicatively coupled with the spreader beam 128 for putting the spreader beam 128 in a protracted position in which it can releasably engage the nacelle 146.

In some examples, a WTG may include more than one WTG tower section. In such examples, the translation of the lift frame 116 along the tower axis 150, the rotation of the carousel 122 about the tower axis 150, the engagement and/or release of a handling device (e.g., clamp 126), or a combination thereof may be used to pick up each WTG tower section from the quay and position (e.g., secure) each WTG tower section at a corresponding selected assembly position (e.g., on top on of the floating platform 106 or another WTG tower section). An example of a multi-section WTG tower is shown in FIG. 1D in which the WTG tower comprises the first WTG tower section 142 and a second WTG tower section 144.

The WTG tower sections, once assembled, may have a height between 50 and 200 meters. Then, additional components (e.g., a nacelle, rotor, blades, etc.) may be assembly on a top of a highest WTG tower section. The lift frame 116 may translate along the tower axis 105 a distance that facilitates construction of the WTG tower sections and the additional components. In some examples, lift frame 116 is movably mounted on the tower 108 for translation along at least 70% of the length of the truss structure of the tower 108. In other examples, the lift frame 116 is moveably mounted on the tower 108 for translation along at least 50% of the length of the truss structure. In any case, the height of the tower 108 may be sufficiently large such that a range of motion of the lift frame 116 along the truss structure is sufficient for constructing the WTG from the lowest WTG tower section to the highest WTG tower section and additional components.

FIG. 1D shows assembly of another component (i.e., the nacelle 146) of the WTG. In FIG. 1D, the carousel 122, lift frame 166, and load handler 124 are shown in a fourth axial and rotational position above the top surface 114 of the quay 102, with the carousel 122 and load handler 124 oriented toward the body of water 104 and towards a second selected assembly position on the second WTG tower section 144. In the fourth axial and rotational position, the nacelle 146 can be secured at the second selected assembly position and released from the load handler 124 (such as from a handling device, such as the spreader beam 128, of the load handler 124). To facilitate the securement of the nacelle 146, the spreader beam 128 of the load handler 124 may engage the nacelle 146 near the top surface 114 of the quay 102. The spreader beam 128 may include hooks, slings, shackles, or the like for engaging with the nacelle 146. Then, the lift frame 116 may translate along the tower axis 150 with the carousel 122 coupled thereto and/or the carousel 122 may rotate about the tower axis 150 to position the nacelle 146 engaged by the spreader beam 128 in the third axial and rotation position.

FIG. 1E shows the lift frame 116, carousel 122, and load handler 124 in a fifth axial and rotational position, which is again similar to the first axial and rotational position in that the lift frame 116, carousel 122, and load handler 124 are close to the top surface 114 of the quay 102, with the carousel 122 and load handler 124 oriented away from the body of water 104 and towards a third WTG component (i.e., blade 148) on the quay 102. In the fourth axial and rotational position a handling device, such as the spreader beam 128, of the load handler 124 can releasably engage a component to be lifted (e.g., the blade 148). As shown, the spreader beam 128 includes clamps 154 for releasably engaging the blade 148. In other examples, the spreader beam 128 can include other components for releasably engaging a WTG component of a WTG. As described above, the controller 140 may include control logic for positioning the carousel 122 and lift frame 116 in the fourth axial and rotational position. The controller 140 may further be communicatively coupled with the spreader beam 128 for putting the spreader beam 128 in a protracted position in which it can releasably engage the blade 148.

FIG. 1F shows assembly of the third WTG component of the WTG. In FIG. 1F, the carousel 122, lift frame 166, and load handler 124 are shown in a fifth axial and rotational position above the top surface 114 of the quay 102, with the carousel 122 and load handler 124 oriented toward the body of water 104 and towards a third selected assembly position on the nacelle 146. In the fifth axial and rotational position, the blade 148 can be secured at the third selected assembly position and released from the load handler 124 (such as from a handling device, such as the spreader beam 128, of the load handler 124).

Although FIGS. 1A-1F show example orientations of the carousel 122, lift frame 116, and load handler 124 with respect to the tower 108, other orientations of the carousel 122, lift frame 116, and load handler 124 with respect to the tower 108 are possible. For example, the carousel 122 may rotate up to 360 degrees with respect to the tower axis 150. Additionally, via translation of the lift frame 116 along the tower axis 150, the carousel and lift frame may be positioned anywhere along a length of the tower 108.

FIG. 8 is a schematic example of a carousel lifting tower 800 including the lifting devices 802 and lifting cables 804 of the carousel lifting tower 800 according to some embodiments of the present disclosure. In the example of FIG. 8, the lifting devices 802, which may include winches, electrical hoists, wire drums, other devices, or a combination thereof, are positioned at a bottom end of the tower 108. The lifting devices 802 may correspond to the lifting devices 118 shown and discussed above with respect to FIG. 1. The bottom end of the tower 808 can include any position along a bottom half of the tower 808. As shown, the lifting cables 804 extend between the lifting devices 802 at the bottom of the tower 808 and the lift frame 116. There may be pulleys at the lift frame 816 and on the tower 808 to facilitate translation of the lift frame 816 via the lifting devices 802. Positioning the lifting devices 802 on the bottom side of the tower 808 can enable efficient access to the lifting devices 802, which, in turn, enables maintenance to be performed on the lifting devices 802 in an easy and efficient manner.

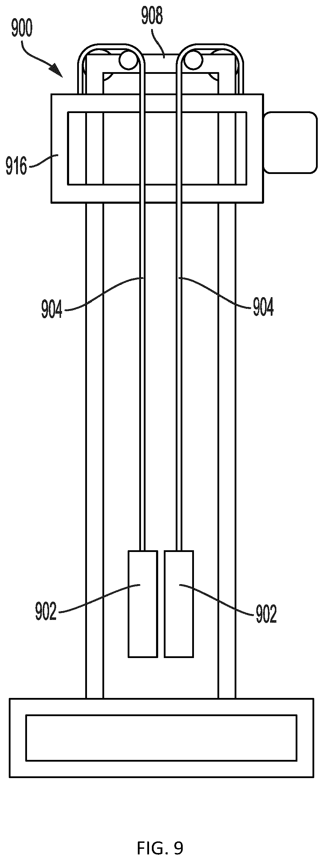

FIG. 9 is a schematic example of a carousel lifting tower 900 including the lifting devices 902 and lifting cables 904 of the carousel lifting tower according to some embodiments of the present disclosure. In the example of FIG. 9, the lifting devices 902, which may include winches, electrical hoists, wire drums, other devices, or a combination thereof, can be positioned at a top end of the tower 908. The lifting devices 902 may correspond to the lifting devices 118 shown in FIG. 1. The top end of the tower 908 can include any positioned along a top half of the tower 908. As shown, lifting cables 904 extend between the lifting devices 902 at the top of the tower 908 and the lift frame 116. There may be pulleys at the lift frame 916 and on the tower 908 to facilitate translation of the lift frame 916 by the lift mechanism, which includes at least the lifting devices 902, the lifting cables 904, and pulleys in this example. Positioning the lifting devices 902 on the top side of the tower 808 can enable shorter lifting cables to be used, thereby reducing resource costs associated with the lifting devices 802.

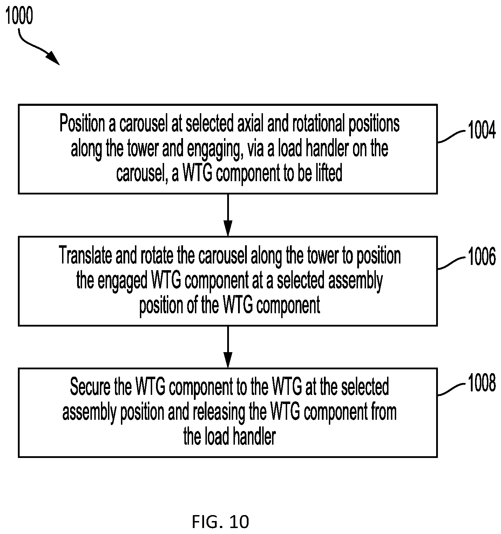

FIG. 10 is a flowchart of a method 1000 for assembling a wind turbine generator (WTG) according to some examples of the present disclosure. In other examples, the method 1000 may include more steps, fewer steps, different steps, or a different order of the steps depicted in FIG. 10. The steps of FIG. 10 are described below with reference to components discussed above in FIGS. 1-9. In other implementations, the method 1000 shown in FIG. 10 may be performed using different carousel lifting towers and carousel lifting tower components than specifically shown in FIGS. 1-9.

In the example of FIG. 10, at block 1002, the method 1000 may involve, at a tower 108 erected at a surface of a quay 102 at which to assemble the WTG, positioning a carousel 122 at a selected axial and rotational position along the tower 108 and engaging, via a load handler on the carousel, a WTG component to be lifted. In some examples, erecting the tower 108 may include stacking a number of truss structure segment (e.g., 1 truss structure segment, 3 truss structure segments, 5 truss structure segments, 10 truss structure segments, or any number therebetween of truss structure segments) of the tower 108 on top of one another. For example, a first truss structure segment of the tower 108 may be positioned on a tower bogie 138 on a quay 102. Then, one or more additional truss structure segments of the tower 108 may be stacked on top of one another until the tower 108 reaches a desired height (e.g., at height between 50 and 200 meters). In some implementations, at least some of the truss structure segments stacked may having different individual heights while in other implementations each truss structure segment can have an equal individual height. In any case, the number and height of the truss structure segments stacked may depend on a height of the WTG to be assembled. For example, a greater number and/or longer truss structure segments may be used for a taller WTG than may be used for a shorter WTG.

The truss structure segments can be assembled using a push-pull hydraulic system the like. For example, each truss structure segment may be lifted positioned on a proceeding section using a crane. Each truss structure segment may further be secured to the proceeding section via latches or another suitable locking mechanism. Due to the segmented structure of the tower 108, the push-pull hydraulic system or other mechanism used for assembling the tower 108 may only need to have a lifting capacity of up to 600 tons. A floating platform 106 may be positioned adjacent to the quay 102. An example of a floating platform being positioned adjacent to a quay is shown in FIG. 1. The floating platform 106 may be positioned prior, after, or during the erecting of the tower 108. The floating platform 106 may be positioned and stabilized adjacent to the quay 102 using mooring lines extending between the floating platform 106 and the quay 102, stabbing guides and/or mooring lines extending between the floating platform 106 and one or more mooring piles in a floor of the body of water 104, other stabilization devices or systems, or a combination thereof.

In some examples, subsequent to the tower 108 being erected and/or the floating platform 106 being positioned, the tower 108 may be repositioned to facilitate the assembly of the WTG. For example, the tower 108 may not be initially positioned at a location along the quay 102 that is adjacent to the floating platform 106 due to the position at which the erected tower was erected, use of the tower at another location to assemble another structure, or for other reasons. The tower bogie 138, which may be a platform or cart with wheels (e.g., electric wheels), may enable the repositioning of the tower 108. For example, as shown in FIG. 1, the tower bogie 138 is moveable along tracks 136 on the top surface 114 of the quay 102, and the tower 108 is on the tower bogie 138. Thus, movement of the tower bogie 138 along the tracks 136 may reposition the tower 108, such as from a first location along the top surface 114 of the quay to a second position along the top surface 114 of the quay 102 that is adjacent to the floating platform 106.

Additionally, the axial and rotational position may be selected based on a location of the component to be lifted. For example, the selected axial and rotational positions may be selected to place the load handler 124 on the carousel 122 in a position to engage with the component. In some examples, the carousel lifting tower 100 may have a maximum lifting capacity in the range of 600-1200 metric tons, or 400 - 1000 metric tons, or 250 - 1200 metric tons. Thus, the component to be lifted may include a component of the WTG having a mass of at least two-hundred and fifty metric tons or having a mass of at least six-hundred metric tons. The WTG component may have a mass of less than six-hundred metric tons in other implementations. The components of the WTG can include WTG tower sections, a nacelle, blades, a rotor, etc.

In one particular example, the component may be the first WTG tower section 142 and the carousel 122 may be positioned in the first axial and rotation position shown in FIG. 1. That is, the carousel 122 may be positioned near the top surface 114 of the quay 102 and rotated to have the load handler 124 pointed toward the first WTG tower section 142. A controller 140 may be communicatively coupled with the carousel 122 for positioning the carousel 122 at the selected axial and rotational positions. As used herein, "communicatively coupled" with the carousel includes, without limitation, the controller 140 being communicatively coupled with a motor or other actuator that drives rotation of the carousel 140. The controller 140 may also be communicatively coupled with a lift frame 116 coupled to the carousel 122 for positioning the carousel 122 at the selected axial and rotational positions. As used herein, "communicatively coupled" with the lift frame 116 includes, without limitation, the controller 140 being communicatively coupled with lifting devices 118 that drive translation of the lift frame 116. The controller 140 may further be communicatively coupled with the load handler 124 for causing the load handler 124 to engage the component. As used herein, "communicatively coupled" with the load handler includes, without limitation, the controller 140 being communicatively coupled with an actuator that drives the load handler 124 (e.g., by causing the clamp 126 to open or close, causing protraction and retraction of the clamp 16, and/or causing protraction and retraction of the spreader beam 128).

In the particular example, a clamp 126 of the load handler 124 is used to engage the first WTG tower section 142. In other examples, the spreader beam 128 or other handling devices may be used to engage the first WTG tower section 142 or other component of the WTG. The engaging of the component by the load handler 124 can involve grasping, supporting, or otherwise holding the component in a secure manner. An example of engagement of the clamp 126 with the first WTG tower section 142 is shown in FIG. 1. Additionally, an example of engagement of the spreader beam 128 with another component (i.e., nacelle 146) is shown in FIG. 3.

At block 1004, the method 1000 may involve translating and rotating the carousel 122 along the tower 108 to position the engaged WTG component at a selected assembly position of the WTG component. The selected assembly position of the WTG component is on or above the floating platform 106 in some examples. That is, the selected assembly position may be on a surface of the floating platform 106 or, as the WTG components are assembled, the selected assembly position may be on a previously assembled WTG component and therefore may be above the floating platform.

Translating the carousel 122 may involve moving the carousel 122 along the tower axis 150 while rotating the carousel 122 may involve moving the carousel 122 about the tower axis 150. The controller 140 can facilitate the translating and rotating via communication with the carousel (or with motors or other devices associated with the carousel) and/or with a lift frame 116. The lift frame 116 may be moveably mounted on the tower 108 between the tower 108 and the carousel 122 such that the lift frame 116 may be translational along the tower axis 150. Thus, in some examples, translating the carousel 122 may involve translating the lift frame 116 to which the carousel 122 is coupled. Additionally, in such examples, the carousel 122 may rotate about the lift frame 116, which may be facilitated by bogies and rails positioned between the lift frame 116 and carousel 122. FIG. 1B shows an example of translation and rotation of the carousel 122 to position an engaged WTG component (i.e., first WTG tower section 142) in a selected assembly position (i.e., first selected assembly position 125). In the example of FIG. 1B, the carousel 122 has been rotated and translated from the first axial and rotational position shown in FIG. 1A to a second axial and rotational position.

At block 1006, the method 1000 may involve securing the WTG component to the WTG at the selected assembly position and releasing the WTG component from the load handler. Securing the WTG component can involve ensuring that the WTG component is locked into position or otherwise secured at the selected assembly position. For example, there may be latches, bolts, or the like that secure the WTG component in the selected assembly position. Then, once the WTG component is secured, releasing the WTG component from the load handler 124 can involve detaching the handling device from the WTG component. For example, the clamp 126 may be opened and retracted to release the first WTG tower section 142 once secured in the first selected assembly position 125 shown in FIG. 2. The releasing of the WTG component by the load handler 124 can be controlled at least in part by the controller 140. For example, the controller 140 may transmit a signal to the load handler 124 to cause the clamp 126 to open and retract.

In some examples, the method 1000 may be repeated with multiple components to assemble the WTG. For example, after the WTG component is secured and released, the carousel 122 may be re-positioned (e.g., by the controller 140) at the selected axial and rotational positions or may be positioned at other selected axial and rotational positions. As a result, the load handler 124 on the carousel 122 can engage a second WTG component (e.g., a second WTG tower section 144 or a nacelle 146). Then, the carousel 122 can be translated and rotated the carousel along the tower 108 to position the second WTG component at another selected assembly position. For example, as shown in FIG. 3, nacelle 146 is positioned at a selected assembly position top of the second WTG tower section 144. The second WTG component can then be secured at the selected assembly position and released form the load handler 124. For example, the nacelle 146 may be attached to hooks on the spreader beam 128. The spreader beam 128 may be moved via extension elements 614 to cause the hooks to engage and release the nacelle 146.

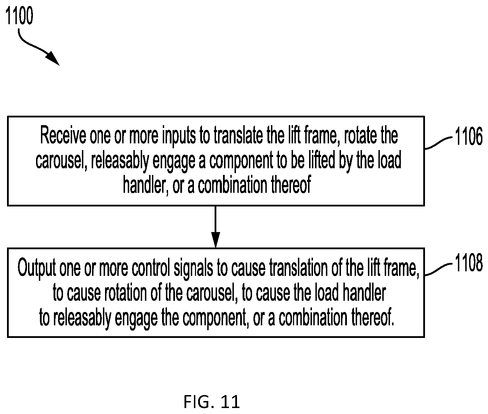

FIG. 11 is a flowchart of a method 1100 for controlling one or more of the lift frame 116, the carousel 122, and the load handler 124 by a controller 140 communicatively coupled to one or more of the lift frame, the carousel, and the load handler. The method 1100 may be executed by control logic of the controller 140. In other examples, the method 1100 may include more steps, fewer steps, different steps, or a different order of the steps depicted in FIG. 11. The steps of FIG. 11 are described below with reference to components discussed above in FIGS. 1-9.

At block 1102, the method 1100 may involve receiving one or more inputs to translate the lift frame 116, rotate the carousel 122, releasably engage a component to be lifted by the load handler 124, or a combination thereof. The input may be a user input transmitted via a user device to the controller 140. The input may include an axial and rotational position for the lift frame 116 and carousel 122 respectively. The input may further include position or orientation for a handling device of the load handler 124.

At block 1104, the method may involve, outputting one or more control signals to cause translation of the lift frame 116, to cause rotation of the carousel 122, to cause the load handler 124 to releasably engage the component, or a combination thereof. A control signal to cause translation of the lift frame 116 may be transmitted to the lifting devices 118 while a control signal to cause rotation of the carousel 122 may be transmitted to a motor for rotating a gear wheel or other suitable actuator for driving rotation of the carousel 122. Additionally, a control signal to cause the load handler 124 to releasably engage the component may be transmitted to an actuator of a handling device (e.g., a hydraulic pump of the clamp 126).

The foregoing description of certain examples, including illustrated examples, has been presented for the purpose of illustration and description and is not intended to be exhaustive or to limit the disclosure to the precise forms disclosed. Numerous modifications, adaptations, and uses thereof will be apparent to those skilled in the art without departing from the scope of the disclosure

## Claims

1. A carousel lifting tower (100) for assembling a wind turbine generator (WTG) comprising:
a tower (108) positionable in an upwardly angled orientation and defining a tower axis (150);
a lift frame (116) movably mounted on the tower for translation along the tower axis;
a carousel (122) coupled to the lift frame for rotation about the tower axis; and
a load handler (124) on the carousel configured for releasably engaging a component to be lifted;
wherein the load handler comprises a clamp (126) for releasably engaging a section of a wind turbine generator (WTG);
wherein the tower has a truss structure in the form of a framework of rigid members assembled into a rigid arrangement extending from a lower end of the tower to an upper end of the tower, wherein the tower is configured for lifting a component of a wind turbine generator (WTG) (142) having a mass of at least 600 metric tons; and
wherein the tower is positioned on a tower bogie (138), in the form of a platform or cart with wheels that enables repositioning of the tower, wherein a first truss structure segment of the tower is positioned on the tower bogie, and one or more additional truss structure segments of the tower are stacked on top of one another until the tower reaches a desired height between 50 and 200 meters.

2. The carousel lifting tower of claim 1, further comprising:
a controller (140) communicatively coupled to one or more of the lift frame, the carousel, and the load handler, the controller including control logic for controlling one or more of the translation along the tower of the lift frame, the rotation about the tower axis of the carousel, and the releasably engaging of the component to be lifted by the load handler.

3. The carousel lifting tower of claim 1, wherein the lift frame is rotationally constrained with respect to the tower axis and the carousel is rotatably coupled to the lift frame for providing at least some of the rotation about the tower axis; optionally, wherein the lift frame is constrained to pure translation along the tower such that the rotation about the tower axis is provided by a rotation of the carousel with respect to the lift frame.

4. The carousel lifting tower of claim 1, further comprising:
a plurality of rails arranged along the tower in parallel with the tower axis;
and a plurality of bogies between the lift frame and the rails.

5. The carousel lifting tower of claim 1, further comprising:
a lifting device (118); and
a plurality of lifting cables (120) extending between the lifting device and the lift frame.

6. The carousel lifting tower of claim 1, wherein the carousel is coupled to the lift frame for rotation about the tower axis through a range of motion of at least 180 degrees; optionally, through a 360 degree range of motion.

7. The carousel lifting tower of claim 1, wherein the tower comprises a truss structure extending along a length from a lower end of the tower to an upper end of the tower, wherein the lift frame is movably mounted on the tower for translation along at least 70% of the length of the truss structure.

8. The carousel lifting tower of claim 1, further comprising:
one or more counterweights arranged on the carousel to balance the load handler and the component to be lifted.

9. The carousel lifting tower of claim 1, wherein the tower comprises a truss structure and the lift frame comprises a circular structure disposed about the tower.

10. A method of assembling a wind turbine generator (WTG), comprising:
at a tower erected at a surface of a quay at which to assemble the WTG, positioning a carousel at a selected axial and rotational position along the tower and engaging, via a load handler in the form of a clamp on the carousel, a WTG component to be lifted;
translating and rotating the carousel along the tower to position the engaged WTG component at a selected assembly position of the WTG component; and
securing the WTG component to the WTG at the selected assembly position and releasing the WTG component from the load handler;
wherein the tower has a truss structure in the form of a framework of rigid members, which is assembled into a rigid arrangement extending from a lower end of the tower to an upper end of the tower, such that the tower is configured for lifting a component of a wind turbine generator (WTG) having a mass of at least 600 metric tons; and
wherein the tower is positioned on a tower bogie, in the form of a platform or cart with wheels that enables repositioning of the tower, wherein a first truss structure segment of the tower is positioned on the tower bogie, and one or more additional truss structure segments of the tower are stacked on top of one another until the tower reaches a desired height between 50 and 200 meters.

11. The method of claim 10, wherein translating and rotating the carousel along the tower comprises translating a lift frame coupled to the carousel along a tower axis of the tower, the tower extending upwardly along the tower axis; optionally, wherein translating and rotating the carousel along the tower comprises rotating the carousel about the tower axis of the tower.

12. The method of claim 10, further comprising, subsequent to releasing the WTG component from the load handler:
engaging, using the load handler, a second WTG component to be lifted;
translating and rotating the carousel along the tower to position the second WTG component at a second selected assembly position of the second WTG component; and
securing the second WTG component to the WTG at the second selected assembly position and releasing the second WTG component from the load handler.

13. The method of claim 10, further comprising:
positioning a floating platform adjacent to the quay, wherein the selected assembly position of the WTG component is on or above the floating platform.

14. The method of claim 13 further comprising:
prior to securing the WTG component to the WTG at the selected assembly position, moving the erected tower along the surface of the quay adjacent to the floating platform.

15. The carousel lifting tower of claim 1, wherein:
the truss structure comprises a plurality of truss structure segments assemble-able into an upwardly extending tower, the plurality of truss structure segments extending along a length of the tower when assembled from a lower end truss structure segment to an upper end truss structure segment along a tower axis;
the lift frame is movably mountable about the tower for translation along at least 70% of the length of the tower; and
the carousel is disposed about the lift frame, the carousel being coupled to the lift frame for rotation 360 degrees about the tower axis.

## Patentansprüche

1. Karussellhubturm (100) zum Zusammenbauen einer Windenergieanlage (WTG), umfassend:
einen Turm (108), der in einer nach oben ausgerichteten Orientierung positionierbar ist und eine Turmachse (150) definiert;
einen Hubrahmen (116), der an dem Turm für eine Verschiebung entlang der Turmachse bewegbar montiert ist;
ein Karussell (122), das mit dem Hubrahmen für eine Drehung um die Turmachse herum gekoppelt ist; und
eine Lasthandhabungseinrichtung (124) an dem Karussell, die zum lösbaren Ineingriffnehmen einer anzuhebenden Komponente konfiguriert ist;
wobei die Lasthandhabungseinrichtung einen Bügel (126) zum lösbaren Ineingriffnehmen eines Abschnitts einer Windenergieanlage (WTG) umfasst;
wobei der Turm eine Fachwerkstruktur in der Form eines Gerüsts aus starren Elementen aufweist, das zu einer starren Anordnung zusammengebaut ist, die sich von einem unteren Ende des Turms zu einem oberen Ende des Turms erstreckt, wobei der Turm zum Anheben einer Komponente einer Windenergieanlage (WTG) (142) konfiguriert ist, die eine Masse von mindestens 600 metrischen Tonnen aufweist; und
wobei der Turm auf einem Turmfahrgestell (138) in der Form einer Plattform oder eines Wagens mit Rädern positioniert ist, das ein Neupositionieren des Turms ermöglicht, wobei ein erstes Fachwerkstruktursegment des Turms auf dem Turmfahrgestell positioniert ist und ein oder mehrere zusätzliche Fachwerkstruktursegmente des Turms übereinander gestapelt werden, bis der Turm eine gewünschte Höhe zwischen 50 und 200 Metern erreicht.

2. Karussellhubturm nach Anspruch 1, ferner umfassend:
eine Steuerung (140), die mit einem oder mehreren von dem Hubrahmen, dem Karussell und der Lasthandhabungseinrichtung kommunikativ gekoppelt ist, wobei die Steuerung eine Steuerlogik zum Steuern von einem oder mehreren von der Verschiebung entlang des Turms des Hubrahmens, der Drehung um die Turmachse des Karussells herum und dem lösbaren Ineingriffnehmen der zu hebenden Komponente durch die Lasthandhabungseinrichtung einschließt.

3. Karussellhubturm nach Anspruch 1, wobei der Hubrahmen in Bezug auf die Turmachse rotatorisch eingeschränkt ist und das Karussell mit den Hubrahmen zum Bereitstellen mindestens eines Teils der Drehung um die Turmachse herum drehbar gekoppelt ist; optional, wobei der Hubrahmen derart auf eine reine Verschiebung entlang des Turms eingeschränkt ist, dass die Drehung um die Turmachse herum durch eine Drehung des Karussells in Bezug auf den Hubrahmen bereitgestellt wird.

4. Karussellhubturm nach Anspruch 1, ferner umfassend:
eine Vielzahl von Schienen, die entlang des Turms parallel zu der Turmachse eingerichtet sind;
und eine Vielzahl von Fahrgestellen zwischen dem Hubrahmen und den Schienen.

5. Karussellhubturm nach Anspruch 1, ferner umfassend:
eine Hubvorrichtung (118); und
eine Vielzahl von Hubseilen (120), die sich zwischen der Hubvorrichtung und dem Hubrahmen erstrecken.

6. Karussellhubturm nach Anspruch 1, wobei das Karussell mit dem Hubrahmen für die Drehung um die Turmachse herum durch einen Laufbereich von mindestens 180 Grad gekoppelt ist; optional durch einen Laufbereich von 360 Grad.

7. Karussellhubturm nach Anspruch 1, wobei der Turm eine Fachwerkstruktur umfasst, die sich entlang einer Länge von einem unteren Ende des Turms zu einem oberen Ende des Turms erstreckt, wobei der Hubrahmen an dem Turm für die Verschiebung entlang mindestens 70 % der Länge der Fachwerkstruktur bewegbar montiert ist.

8. Karussellhubturm nach Anspruch 1, ferner umfassend:
ein oder mehrere Gegengewichte, die an dem Karussell eingerichtet sind, um die Lasthandhabungseinrichtung und die anzuhebende Komponente auszugleichen.

9. Karussellhubturm nach Anspruch 1, wobei der Turm eine Fachwerkstruktur umfasst und der Hubrahmen eine kreisförmige Struktur umfasst, die um den Turm herum angeordnet ist.

10. Verfahren zum Zusammenbauen einer Windenergieanlage (WTG), umfassend:
an einem Turm, der an einer Oberfläche eines Kais errichtet ist, an dem die WTG zusammenzubauen ist, Positionieren eines Karussells an einer ausgewählten axialen und Rotationsposition entlang des Turms und Ineingriffnehmen, über eine Lasthandhabungseinrichtung in der Form eines Bügels an dem Karussell, einer anzuhebenden WTG-Komponente;
Verschieben und Drehen des Karussells entlang des Turms, um die in Eingriff genommene WTG-Komponente an einer ausgewählten Zusammenbauposition der WTG-Komponente zu positionieren; und
Befestigen der WTG-Komponente an der WTG an der ausgewählten Zusammenbauposition und Lösen der WTG-Komponente von der Lasthandhabungseinrichtung;
wobei der Turm eine Fachwerkstruktur in der Form eines Gerüsts aus starren Elementen aufweist, das zu einer starren Anordnung zusammengebaut ist, die sich von einem unteren Ende des Turms zu einem oberen Ende des Turms erstreckt, derart dass der Turm zum Anheben einer Komponente einer Windenergieanlage (WTG) konfiguriert ist, die eine Masse von mindestens 600 metrischen Tonnen aufweist; und
wobei der Turm auf einem Turmfahrgestell in der Form einer Plattform oder eines Wagens mit Rädern positioniert ist, das das Neupositionieren des Turms ermöglicht, wobei ein erstes Fachwerkstruktursegment des Turms auf dem Turmdrehgestell positioniert ist und ein oder mehrere zusätzliche Fachwerkstruktursegmente des Turms übereinander gestapelt werden, bis der Turm eine gewünschte Höhe zwischen 50 und 200 Metern erreicht.

11. Verfahren nach Anspruch 10, wobei das Verschieben und das Drehen des Karussells entlang des Turms das Verschieben eines Hubrahmens, der mit dem Karussell gekoppelt ist, entlang einer Turmachse des Turms umfasst, wobei sich der Turm entlang der Turmachse nach oben erstreckt; optional, wobei das Verschieben und das Drehen des Karussells entlang des Turms das Drehen des Karussells um die Turmachse des Turms herum umfasst.

12. Verfahren nach Anspruch 10, ferner umfassend, nach dem Lösen der WTG-Komponente von der Lasthandhabungseinrichtung:
Ineingriffnehmen, unter Verwendung der Lasthandhabungseinrichtung, einer zweiten anzuhebenden WTG-Komponente;
Verschieben und Drehen des Karussells entlang des Turms, um die zweite WTG-Komponente an einer zweiten ausgewählten Zusammenbauposition der zweiten WTG-Komponente zu positionieren; und
Befestigen der zweiten WTG-Komponente an der WTG an der zweiten ausgewählten Zusammenbauposition und Lösen der zweiten WTG-Komponente von der Lasthandhabungseinrichtung.

13. Verfahren nach Anspruch 10, ferner umfassend:
Positionieren einer schwimmenden Plattform angrenzend an den Kai, wobei die ausgewählte Zusammenbauposition der WTG-Komponente sich auf oder über der schwimmenden Plattform befindet.

14. Verfahren nach Anspruch 13, ferner umfassend:
vor dem Befestigen der WTG-Komponente an der WTG an der ausgewählten Zusammenbauposition, Bewegen des errichteten Turms entlang der Oberfläche des Kais angrenzend an die schwimmende Plattform.

15. Karussellhubturm nach Anspruch 1, wobei:
die Fachwerkstruktur eine Vielzahl von Fachwerkstruktursegmenten umfasst, die zu einem sich nach oben erstreckenden Turm zusammengebaut werden können, wobei sich die Vielzahl von Fachwerkstruktursegmenten, wenn zusammengebaut, entlang einer Länge des Turms von einem unteren Endfachwerkstruktursegment zu einem oberen Endfachwerkstruktursegment entlang einer Turmachse erstreckt;
der Hubrahmen um den Turm herum für die Verschiebung entlang mindestens 70 % der Länge des Turms bewegbar montierbar ist; und
das Karussell um den Hubrahmen herum angeordnet ist, wobei das Karussell mit dem Hubrahmen für die Drehung von 360 Grad um die Turmachse herum gekoppelt ist.

## Revendications

1. Tour de levage de carrousel (100) pour l'assemblage d'un aérogénérateur (WTG) comprenant :
une tour (108) pouvant être positionnée dans une orientation inclinée vers le haut et définissant un axe de tour (150) ;
un cadre de levage (116) monté de manière mobile sur la tour pour une translation le long de l'axe de tour ;
un carrousel (122) accouplé au cadre de levage pour une rotation autour de l'axe de tour ; et
un module de manutention de charge (124) sur le carrousel conçu pour une mise en prise libérable avec un composant à soulever ;
dans laquelle le module de manutention de charge comprend une pince (126) pour une mise en prise libérable avec une section d'un aérogénérateur (WTG) ;
dans laquelle la tour a une structure en treillis sous la forme d'une charpente d'éléments rigides assemblés en un agencement rigide s'étendant d'une extrémité inférieure de la tour à une extrémité supérieure de la tour, dans laquelle la tour est conçue pour le levage d'un composant d'un aérogénérateur (WTG) (142) ayant une masse d'au moins 600 tonnes métriques ; et
dans laquelle la tour est positionnée sur un bogie de tour (138), sous la forme d'une plate-forme ou d'un chariot à roues qui permet un repositionnement de la tour, dans laquelle un premier segment de structure en treillis de la tour est positionné sur le bogie de tour, et un ou plusieurs segments supplémentaires de structure en treillis de la tour sont empilés les uns sur les autres jusqu'à ce que la tour atteigne une hauteur souhaitée entre 50 et 200 mètres.

2. Tour de levage de carrousel selon la revendication 1, comprenant en outre :
un dispositif de commande (140) couplé de manière communicative à un ou plusieurs parmi le cadre de levage, le carrousel et le module de manutention de charge, le dispositif de commande comportant une logique de commande permettant de commander une ou plusieurs parmi la translation le long de la tour du cadre de levage, la rotation autour de l'axe de tour du carrousel et la mise en prise libérable du composant à soulever par le module de manutention de charge.

3. Tour de levage de carrousel selon la revendication 1, dans laquelle le cadre de levage est contraint de manière rotative par rapport à l'axe de tour et le carrousel est accouplé de manière rotative au cadre de levage pour la fourniture d'au moins une partie de la rotation autour de l'axe de tour ; éventuellement, dans laquelle le cadre de levage est contraint à une translation pure le long de la tour de telle sorte que la rotation autour de l'axe de tour est fournie par une rotation du carrousel par rapport au cadre de levage.

4. Tour de levage de carrousel selon la revendication 1, comprenant en outre :
une pluralité de rails agencés le long de la tour en parallèle de l'axe de tour ;
et une pluralité de bogies entre le cadre de levage et les rails.

5. Tour de levage de carrousel selon la revendication 1, comprenant en outre :
un dispositif de levage (118) ; et
une pluralité de câbles de levage (120) s'étendant entre le dispositif de levage et le cadre de levage.

6. Tour de levage de carrousel selon la revendication 1, dans laquelle le carrousel est accouplé au cadre de levage pour une rotation autour de l'axe de tour sur une plage de mouvement d'au moins 180 degrés ; éventuellement, sur une plage de mouvement de 360 degrés.

7. Tour de levage de carrousel selon la revendication 1, dans laquelle la tour comprend une structure en treillis s'étendant sur une longueur allant d'une extrémité inférieure de la tour à une extrémité supérieure de la tour, dans laquelle le cadre de levage est monté de manière mobile sur la tour pour une translation sur au moins 70 % de la longueur de la structure en treillis.

8. Tour de levage de carrousel selon la revendication 1, comprenant en outre :
un ou plusieurs contrepoids agencés sur le carrousel pour équilibrer le module de manutention de charge et le composant à soulever.

9. Tour de levage de carrousel selon la revendication 1, dans laquelle la tour comprend une structure en treillis et le cadre de levage comprend une structure circulaire disposée autour de la tour.

10. Procédé d'assemblage d'un aérogénérateur (WTG), comprenant :
au niveau d'une tour érigée à une surface d'un quai où assembler l'aérogénérateur, le positionnement d'un carrousel au niveau d'une position axiale et de rotation choisie le long de la tour et la mise en prise, par l'intermédiaire d'un module de manutention de charge sous la forme d'une pince sur le carrousel, d'un composant d'aérogénérateur à soulever ;
la translation et la rotation du carrousel le long de la tour pour positionner le composant d'aérogénérateur mis en prise au niveau d'une position d'assemblage choisie du composant d'aérogénérateur ; et
la fixation du composant d'aérogénérateur à l'aérogénérateur au niveau de la position d'assemblage choisie et la libération du composant d'aérogénérateur à partir du module de manutention de charge ;
dans laquelle la tour a une structure en treillis sous la forme d'une charpente d'éléments rigides, qui est assemblée en un agencement rigide s'étendant d'une extrémité inférieure de la tour à une extrémité supérieure de la tour, de telle sorte que la tour est conçue pour le levage d'un composant d'un aérogénérateur (WTG) ayant une masse d'au moins 600 tonnes métriques ; et
dans laquelle la tour est positionnée sur un bogie de tour, sous la forme d'une plate-forme ou d'un chariot à roues qui permet un repositionnement de la tour, dans laquelle un premier segment de structure en treillis de la tour est positionné sur le bogie de tour, et un ou plusieurs segments supplémentaires de structure en treillis de la tour sont empilés les uns sur les autres jusqu'à ce que la tour atteigne une hauteur souhaitée entre 50 et 200 mètres.

11. Procédé selon la revendication 10, dans lequel la translation et la rotation du carrousel le long de la tour comprennent la translation d'un cadre d'ascenseur accouplé au carrousel le long d'un axe de tour de la tour, la tour s'étendant vers le haut le long de l'axe de tour ; éventuellement, dans lequel la translation et la rotation du carrousel le long de la tour comprennent la rotation du carrousel autour de l'axe de tour de la tour.

12. Procédé selon la revendication 10, comprenant en outre, après la libération du composant d'aérogénérateur à partir du module de manutention de charge :
la mise en prise, à l'aide du module de manutention de charge, d'un second composant d'aérogénérateur à soulever ;
la translation et la rotation du carrousel le long de la tour pour positionner le second composant d'aérogénérateur au niveau d'une seconde position d'assemblage choisie du second composant d'aérogénérateur ; et
la fixation du second composant d'aérogénérateur à l'aérogénérateur au niveau de la seconde position d'assemblage choisie et la libération du second composant d'aérogénérateur à partir du module de manutention de charge.

13. Procédé selon la revendication 10, comprenant en outre :
le positionnement d'une plate-forme flottante adjacente au quai, dans lequel la position d'assemblage choisie du composant d'aérogénérateur est sur ou au-dessus de la plate-forme flottante.

14. Procédé selon la revendication 13, comprenant en outre :
avant la fixation du composant d'aérogénérateur à l'aérogénérateur au niveau de la position d'assemblage choisie, le déplacement de la tour érigée le long de la surface du quai adjacente à la plate-forme flottante.

15. Tour de levage de carrousel selon la revendication 1, dans laquelle :
la structure en treillis comprend une pluralité de segments de structure en treillis pouvant être assemblés en une tour s'étendant vers le haut, la pluralité de segments de structure en treillis s'étendant sur une longueur de la tour lorsqu'ils sont assemblés d'un segment de structure en treillis d'extrémité inférieure à un segment de structure en treillis d'extrémité supérieure le long d'un axe de tour ;
le cadre de levage peut être monté de manière mobile autour de la tour pour une translation sur au moins 70 % de la longueur de la tour ; et
le carrousel est disposé autour du cadre de levage, le carrousel étant accouplé au cadre de levage pour une rotation à 360 degrés autour de l'axe de tour.
